# FASCICULE DE BREVET EUROPEEN

(11) **EP 3 153 481 B1**
(45) Date de publication et mention de la délivrance du brevet: **05.08.2020**
(21) Numéro de dépôt: 16192194.5
(22) Date de dépôt: 04.10.2016
(51) Int. Cl.: C03C 17/00, C03C 17/32, C03C 17/42, C03C 17/34

(54) **PROCEDE DE RECOUVREMENT D'UN ARTICLE EN VERRE**
BESCHICHTUNGSVERFAHREN EINES GLASARTIKELS
METHOD FOR COVERING A GLASS ITEM

(30) Priorité: 06.10.2015 FR 1559510
(43) Date de publication de la demande: 12.04.2017
(73) Titulaire: SGD S.A., 92800 Puteaux (FR)
(72) Inventeur: PERROT, Carine, 76260 ETALONDES (FR); DEPOILLY, Christophe, 80210 AIGNEVILLE (FR)
(74) Mandataire: Weber, Jean-François

(56) Documents cités:
- WO-A2-2008/134315
- FR-A1- 2 346 230
- GB-A- 1 458 069

## Description

La présente invention se rapporte au domaine général du traitement des articles en verre, et en particulier des récipients du genre flacon, dans un but fonctionnel et/ou décoratif, en particulier dans les secteurs industriels concernés par l'emballage et le conditionnement de substances liquides, pâteuses ou pulvérulentes, comme par exemple les substances pharmaceutiques, alimentaires ou cosmétiques.

L'invention concerne plus précisément un procédé de recouvrement d'un article en verre par un revêtement formé d'au moins un film souple de rétention.

Il est connu de recourir à des récipients en verre pour contenir des produits liquides, en particulier dans le secteur pharmaceutique, mais également dans d'autres secteurs (secteur cosmétique et notamment parfumerie, secteur alimentaire...). Le verre s'avère en effet être un matériau particulièrement adapté pour le stockage de produits à usage pharmaceutique ou à usage vétérinaire, du fait de son caractère relativement neutre qui permet d'éviter ou de limiter les interactions avec le produit contenu dans le récipient, de sa robustesse, de sa transparence (qui permet un contrôle visuel du contenu) et de sa stabilité mécanique et chimique. Ces différentes qualités sont également recherchées dans des secteurs autres que le secteur pharmaceutique, par exemple dans le domaine cosmétique, où l'utilisation de verre pour la réalisation de flacons à parfum est particulièrement prisé, compte tenu du caractère noble généralement prêté au verre par les consommateurs et des qualités précitées de transparence, de robustesse et de stabilité de ce matériau, ou encore dans le domaine alimentaire.

Le verre n'en présente pas moins certains inconvénients qui peuvent entraîner des conséquences particulièrement dommageables.

Ainsi, l'un des inconvénients majeurs du verre est son caractère fragile. En cas de choc, par exemple du fait d'une chute du récipient (lequel peut par exemple consister en un flacon renfermant un médicament à perfuser ou à injecter), le verre peut facilement se briser en de multiples morceaux de différentes tailles projetés en tous sens, qui peuvent être coupants et pointus, avec tous les risques que cela présente pour le personnel en charge de la manipulation du flacon concerné (personnel hospitalier par exemple) et les personnes qui se trouvent à proximité du récipient lorsqu'il se brise (patient par exemple). Ainsi, en cas de casse d'un récipient en verre, il est nécessaire de procéder à un nettoyage particulièrement minutieux et fastidieux pour être certain d'éliminer tout bris de verre, même de petite taille, qui pourrait blesser une personne marchant dessus ou l'ingérant par inadvertance. En outre, lorsque le récipient en verre se casse, le produit liquide qu'il renferme se répand brutalement à l'extérieur avec généralement des projections et éclaboussures dans un large périmètre. Cela entraîne non seulement la nécessité d'un nettoyage, mais peut également et surtout entraîner un risque pour la santé et la sécurité des personnes à proximité (personnel hospitalier, patient) lorsque le produit contenu dans le flacon en verre est un produit dangereux, tel qu'un médicament cytotoxique. Le caractère fragile du verre est également une préoccupation majeure sur les sites industriels de remplissage de récipients en verre, notamment dans les secteurs pharmaceutiques et alimentaires, dans la mesure où toute casse d'un récipient sur la ligne de remplissage impose la mise en œuvre d'un nettoyage complet de la ligne pour éviter d'éventuelles contaminations croisées.

Afin de remédier à ce problème, il a été proposé d'équiper des flacons pharmaceutiques en verre renfermant un produit cytotoxique d'un suremballage de protection en plastique rigide (polypropylène). Un tel suremballage est destiné à prévenir les chocs auxquels les flacons peuvent être soumis, durant le transport notamment, et permet également aux utilisateurs d'éviter tout contact lors de la manipulation des flacons avec la surface en verre de ces derniers qui pourrait avoir été polluée par la substance cytotoxique contenue dans le flacon au moment du remplissage de ces derniers. La fixation du suremballage au flacon peut être réalisée par différents moyens, comme par exemple grâce à de petits barreaux en plastique ou grâce à un anneau à ailettes fixé sous le col du flacon.

Le recours à de tels suremballages permet certes d'améliorer la sécurité d'utilisation, mais cette dernière est néanmoins loin d'être optimale.

Ainsi, le suremballage plastique, du fait de son caractère relativement rigide, ne permet pas un bon amortissement des chocs et peut lui-même se briser. En outre, il ne permet pas forcément de retenir, si le flacon se casse, non seulement les bris de verre mais également le liquide contenu dans le flacon.

On connaît également des récipients de laboratoire en verre recouverts d'un film de polyuréthane pour en améliorer la résistance aux chocs. Ce film présente toutefois une souplesse relativement limitée, de sorte que son efficacité en matière de résistance aux chocs n'est pas optimale. Ce film ne permet pas en outre d'assurer efficacement la rétention des bris de verre et du liquide contenu dans le récipient si ce dernier se casse (ce qui est acceptable en l'espèce, s'agissant d'un récipient de laboratoire et non d'un récipient destiné à contenir un produit pharmaceutique, et en particulier un produit cytotoxique). Le film en question présente en outre une texture « *martelée* », avec un état de surface légèrement rugueux, qui pourrait favoriser la rétention en surface d'éventuelles matières contaminantes, étant entendu en outre qu'une telle texture n'est pas optimale sur le plan de la stérilisation, notamment en autoclave.

Les faiblesses et inconvénients des films de polyuréthane mis en œuvre dans l'art antérieur proviennent par ailleurs essentiellement des procédés connus d'application de ces films, qui ne permettent pas d'obtenir un film présentant toutes les qualités requises, non seulement sur le plan esthétique mais également et surtout en matière de rétention de liquide et bris de verre, ainsi que de protection contre les chocs.

Le document GB-1 458 069 décrit un prépolymère de polyuréthane à chaîne étendue destiné au recouvrement de bouteilles en verre pour boissons gazeuses. Le document WO-2008/134315 A2 décrit une étape de préchauffage de récipients en verre avant d'appliquer un revêtement.

Les objets assignés à l'invention visent en conséquence à porter remède aux différents inconvénients exposés dans ce qui précède et à proposer un nouveau procédé qui permet de recouvrir, de façon particulièrement rapide et fiable, un article en verre par un revêtement formé d'au moins un film souple de rétention qui, tout en présentant un excellent aspect, confère à l'article en verre qu'il recouvre des propriétés remarquables en matière de rétention de bris de verre et de liquide et de protection contre les chocs, pour un coût de production réduit.

Un autre objet de l'invention vise à proposer un nouveau procédé de recouvrement d'un article en verre par un revêtement formé d'au moins un film souple de rétention, qui peut s'adapter très rapidement et facilement à des articles en verre de formes et dimensions différentes.

Un autre objet de l'invention vise à proposer un nouveau procédé de recouvrement d'un article en verre par un revêtement formé d'au moins un film souple de rétention particulièrement homogène et uniforme, y compris pour un article en verre présentant une forme complexe.

Un autre objet de l'invention vise à proposer un nouveau procédé de recouvrement d'un article en verre par un revêtement formé d'au moins un film souple de rétention qui se prête particulièrement bien à une production industrielle avec une maintenance réduite et des temps de production continue augmentés.

Un autre objet de l'invention vise à proposer un nouveau procédé de recouvrement d'un article en verre par un revêtement formé d'au moins un film souple de rétention qui permet des cadences de production élevées et avec un rendement de recouvrement optimal.

Un autre objet de l'invention vise à proposer un nouveau procédé de recouvrement d'un article en verre par un revêtement formé d'au moins un film souple de rétention particulièrement adhérent à l'article en verre.

Un autre objet de l'invention vise à proposer un nouveau procédé de recouvrement d'un article en verre par un revêtement formé d'au moins un film souple de rétention qui présente une épaisseur importante tout en étant exempt de défauts d'aspect (coulures ou autres).

Un autre objet de l'invention vise à proposer un nouveau procédé de recouvrement d'un article en verre par un revêtement formé d'au moins un film souple de rétention particulièrement cohésif.

Un autre objet de l'invention vise à proposer un nouveau procédé de recouvrement d'un article en verre par un revêtement formé d'au moins un film souple de rétention particulièrement résistant et facilement adaptable à des contraintes particulières (stérilisation, résistance à l'alcool, capacité à être directement imprimé...).

Un autre objet de l'invention vise à proposer un nouveau procédé de recouvrement d'un article en verre par un revêtement formé d'au moins un film souple de rétention qui présente un aspect visuel particulièrement attractif, et ce de façon particulièrement simple et économique.

Les objets assignés à l'invention sont atteints à l'aide d'un procédé de recouvrement d'un article en verre selon la revendication 1.

D'autres objets et avantages de l'invention apparaîtront mieux à la lecture de la description qui suit.

L'invention concerne un procédé de recouvrement d'un article en verre, par exemple un contenant en verre creux qui peut être obtenu par tout procédé verrier classique (verre moulé, verre étiré, procédé « *Vello* », procédé « *Danner* »...). Le terme « *verre* » doit être ici compris dans son acception classique, et désigne donc un verre minéral, et de préférence un verre de silice. Par exemple, le verre constituant l'article à recouvrir est un verre blanc, transparent, tel qu'un verre sodocalcique ou un verre borosilicate. Le verre employé pour réaliser l'article à recouvrir est de préférence incolore, mais peut alternativement être coloré, par exemple par des oxydes métalliques. De préférence, l'article en verre est un récipient du genre flacon ou bouteille pourvu d'une paroi en verre délimitant une cavité d'accueil pour une substance fluide, c'est-à-dire une substance susceptible de s'écouler comme par exemple une substance liquide, pâteuse (tel qu'un liquide avec un degré de viscosité élevé) ou pulvérulente. De préférence, le récipient en question est conçu pour contenir un liquide, par exemple de nature pharmaceutique (médicament, et en particulier médicament cytotoxique), auquel cas le récipient forme par exemple une ampoule, un flacon, une seringue ou un réservoir à perfusion. L'invention n'est toutefois pas limitée à un procédé de recouvrement d'un flacon à usage pharmaceutique, et concerne également par exemple les récipients en verre destinés à contenir des produits à usage vétérinaire, ou encore des récipients en verre destinés à contenir une substance (de préférence liquide) à usage alimentaire (l'article en verre forme par exemple dans ce cas un biberon), ou encore une substance (de préférence liquide) à usage cosmétique (parfum corporel, crème ou autre). De manière générale, le récipient 1 est donc avantageusement destiné à contenir, dans sa cavité d'accueil, une substance destinée à être administrée à un être humain ou à un animal. Le récipient en verre destiné à être soumis au procédé de recouvrement selon l'invention peut bien entendu présenter toute forme adaptée à sa fonction, et se présenter par exemple sous la forme d'un flacon avec une paroi en verre comprenant avantageusement un fond, une paroi latérale qui s'élève à partir et à la périphérie dudit fond et un goulot qui ferme le flacon tout en ménageant une ouverture de remplissage/distribution permettant de mettre en communication la cavité avec l'extérieur. L'ouverture est éventuellement obturée par un bouchon amovible. Il est cependant parfaitement envisageable que l'article en verre affecte tout autre forme, et en particulier une forme dépourvue de col comme par exemple une forme de tube, d'ampoule, de seringue, ou autre, en fonction de l'usage visé.

Le procédé selon l'invention est un procédé de recouvrement d'un article en verre par un revêtement formé d'au moins un film souple de rétention. Le revêtement vise donc à assumer, grâce au film souple qui le compose, au moins une fonction de rétention en cas de casse de l'article en verre qu'il revêt, par exemple à la suite d'une chute, cette fonction de rétention visant à ce que ledit film forme une enveloppe retenant en son sein à la fois les bris de verre et le cas échéant la substance fluide qui était présente au sein du récipient formant avantageusement l'article en verre. De préférence, ledit film souple est non seulement un film de rétention mais également un film de protection qui assure une fonction de protection de l'article en verre contre les chocs, afin d'augmenter la résistance aux chocs dudit article, le revêtement jouant à cet effet, grâce audit film souple qui le compose, le rôle d'une enveloppe protectrice amortissante « *anti-casse* ». De préférence, le revêtement assure également une fonction de renforcement de l'article en verre, notamment en remplissant les microfissures potentiellement présentes à la surface de l'article en verre.

Dans le mode de réalisation préférentiel, évoqué ci-avant, où l'article en verre est un récipient du genre flacon ou bouteille pourvu d'une paroi en verre délimitant une cavité d'accueil, ladite paroi en verre présente avantageusement une face interne située en regard de ladite cavité (c'est-à-dire faisant face à ladite cavité) et une face externe opposée. Dans ce cas, le procédé selon l'invention est avantageusement mis en oeuvre pour que le revêtement recouvre au moins en partie, et de préférence sensiblement en totalité, ladite face externe.

Ledit film souple forme ainsi avantageusement une enveloppe de rétention et de protection qui recouvre extérieurement au moins une fraction, et de préférence sensiblement la totalité, de la surface de l'article en verre. Par exemple, dans le mode de réalisation préférentiel où l'article en verre est un récipient avec un fond à partir duquel s'élève une paroi latérale, le procédé est mis en œuvre pour que le film souple (et donc le revêtement qu'il forme ou contribue à former) recouvre sensiblement continûment et uniformément la surface externe de l'article en verre tant au niveau du fond que de la paroi latérale et du goulot, de sorte que le flacon formant avantageusement l'article en verre est en l'espèce entièrement revêtu sur sa surface externe, laquelle n'est donc sensiblement plus accessible de l'extérieur. La description qui suit fera référence à un article en verre qui constitue un récipient, par exemple un biberon ou un récipient destiné à contenir une substance pharmaceutique, étant entendu que l'invention n'est absolument pas limitée à de telles applications, comme exposé précédemment.

Le procédé selon l'invention comprend une étape de formation dudit film souple, visant à déposer sur la surface (de préférence externe) dudit article en verre une couche d'un matériau souple formant ledit film souple de rétention. De préférence, le film souple recouvre directement la paroi en verre, c'est-à-dire qu'il vient avantageusement en contact direct avec cette dernière, sans que ne soit interposée de couche intermédiaire entre le film souple et l'article en verre. Dans ce cas, le film souple adhère donc directement et par lui-même (sans couche de colle ni couche primaire intermédiaire) à la paroi en verre de l'article en verre à revêtir.

Ladite étape de formation dudit film souple inclut au moins, conformément à l'invention, une première opération de pulvérisation électrostatique sur ledit article d'une première composition formée par une dispersion d'une substance à base de polyuréthane dans un solvant qui est de l'eau, pour obtenir une première couche (à base donc de polyuréthane) destinée à former ledit film souple.

Le terme « solvant » est ici entendu de manière relativement extensive, au sens où ladite substance à base de polyuréthane n'est pas nécessairement dissoute, dissociée par ledit solvant. Le solvant en question, préférentiellement majoritaire au sein de ladite première préparation, forme cependant avantageusement un vecteur, de préférence liquide, pour ladite substance à base de polyuréthane.

Le procédé selon l'invention conduit donc à déposer sur l'article en verre un film souple de rétention à base de polyuréthane, c'est-à-dire essentiellement formé de polyuréthane. Comme exposé précédemment, ladite première couche est destinée à former le film souple, c'est-à-dire que la première couche devient ledit film souple une fois toutes les étapes du procédé selon l'invention effectuées (incluant non seulement ladite première opération de pulvérisation électrostatique susvisée, mais également d'éventuelles étapes ultérieures de désolvatation, séchage, cuisson...). Conformément à l'invention, ladite première couche est suffisamment épaisse pour que ledit film souple (qui présente un caractère sec) présente une épaisseur d'au moins 50 µm. Les travaux qui ont conduit à l'invention ont en effet permis d'établir qu'une telle épaisseur minimale permettait audit film d'assurer de façon optimale une fonction de rétention à la fois des bris de verre et du liquide éventuellement contenu au sein de l'article en verre, ainsi qu'une excellente résistance aux chocs. De préférence, ladite épaisseur dudit film souple est sensiblement inférieure ou égale à 300 µm, de préférence sensiblement inférieure ou égale à 200 µm. Ainsi, l'épaisseur du film souple est avantageusement comprise entre 50 et 200 µm, selon notamment la taille et le poids de l'article en verre à protéger, ainsi que de la nature exacte de la première composition à base de polyuréthane.

La technique de projection électrostatique mise en œuvre dans le cadre de l'invention repose pour l'essentiel sur :
- le placement de la première composition à un potentiel avec une première polarité, et sur le placement de l'article en verre à revêtir à un potentiel avec une autre polarité (par exemple par mise en contact de l'article en verre avec une électrode),
- sur la fragmentation (en l'espèce mécanique) de la première composition (atomisation) pour obtenir un nuage de particules fluides (gouttelettes) à projeter, lesdites particules fluides ainsi projetées étant attirées par la surface en verre à revêtir sous l'effet du champ électrique résultant de la différence de polarité susvisée, qui permet en outre auxdites particules fluides de se répartir de façon homogène sur la surface de l'article en verre.

Le recours à une technique de pulvérisation électrostatique pour déposer ladite première couche destinée à former le film souple s'avère être remarquablement avantageux pour le dépôt, sur un article en verre, d'une couche aussi épaisse à base de polyuréthane. En effet, la technologie électrostatique permet un taux de transfert élevé, par exemple de l'ordre de 50 à 60%. Or, pour l'application d'un film souple de rétention dont l'épaisseur est importante, comme c'est le cas ici (épaisseur supérieure ou égale à 50 µm), le rendement de dépôt influe directement et significativement sur le coût de production. L'invention permet ainsi, par la mise en œuvre d'une pulvérisation électrostatique pour déposer la première couche, de maîtriser le coût de fabrication du revêtement sans que cela n'affecte les propriétés de rétention et de protection recherchées. La technologie de pulvérisation électrostatique permet en outre un temps de réglage extrêmement réduit, en particulier par rapport à un système pneumatique classique qui met généralement en œuvre, notamment lorsqu'il s'agit de recouvrir un récipient du genre flacon, plusieurs pistolets (en général trois) à régler individuellement. L'invention a par ailleurs également permis d'établir qu'il était possible d'appliquer, au moyen de la technologie de pulvérisation électrostatique, une substance à forte viscosité (ce qui est le cas de la première composition à base de polyuréthane) sans générer de micro-bullage, la technique de pulvérisation électrostatique permettant en l'espèce l'obtention d'une première couche particulièrement homogène, y compris lorsque l'article en verre à recouvrir est de forme complexe (tel qu'un récipient). Par exemple, dans un mode de réalisation avantageux du procédé selon l'invention, qui permet d'obtenir un film de rétention particulièrement résistant, souple et cohésif, la première composition présente une viscosité à 20°C qui est comprise entre sensiblement 800 et 2000 mPa.s, de façon encore plus préférentielle entre sensiblement 1000 et 1800 mPa.s, sans que cela n'empêche l'obtention d'une première couche régulière et homogène.

Afin en particulier de favoriser l'effet de dépôt électrostatique, le solvant dans lequel est dispersée ladite substance à base de polyuréthane formant la première composition est de l'eau, de sorte que ladite première composition est formée par une dispersion en phase aqueuse de ladite substance à base de polyuréthane. Le recours à un solvant aqueux permet d'optimiser l'efficacité de la pulvérisation électrostatique, tout en étant respectueux de l'environnement et de la santé des opérateurs de production.

Avantageusement, ladite substance à base de polyuréthane consiste en un matériau polymérisé (à base de, ou constitué entièrement de, polyuréthane), de préférence non réactif (c'est-à-dire déjà entièrement polymérisé), dont la masse molaire est suffisamment élevée (par exemple au moins égale à 200 000 g.mol⁻¹, et de façon encore plus préférentielle au moins égale à 300 000 g.mol⁻¹) pour que la simple évaporation de la phase aqueuse, par exemple obtenue par séchage naturel ou forcé de la première couche, entraîne spontanément la formation d'un film cohésif formant ledit film souple de rétention. Dans ce mode de réalisation avantageux, le film souple est donc obtenu de préférence exclusivement par séchage de la première couche une fois cette dernière déposée sur la surface de la paroi en verre de l'article en verre, avantageusement sans qu'aucune réaction, en particulier aucune réaction de polymérisation ou de réticulation, n'intervienne après le dépôt de ladite première couche sur la paroi en verre. Avantageusement, la première composition présente un extrait sec compris entre 20 et 70 % en poids, et de préférence compris entre 30 et 60% en poids, de façon encore plus préférentielle entre 45 et 55% en poids, de façon à permettre l'obtention, à partir de la première couche et par simple évaporation de la phase aqueuse comme évoqué ci-avant, un film homogène et cohésif destiné à former ledit film souple de rétention et à adhérer à cette fin directement à la paroi de l'article en verre. Dans un mode de réalisation particulièrement préféré, ladite première composition présente un extrait sec sensiblement égal à 48% en poids. Avantageusement, la seule évaporation de la phase aqueuse au sein de laquelle est dispersé le matériau polymérisé suffit donc pour former un film cohésif qui adhère directement sur l'article en verre et forme ainsi la première couche. La première composition ne contient donc pas dans ce cas de produit réactif, du type isocyanate, mais inclut directement le polymère à base de PU déjà complètement polymérisé et dispersé en phase aqueuse. Il est cependant tout à fait envisageable, sans pour autant que l'on sorte du cadre de l'invention, que le matériau dispersé en phase aqueuse ne soit pas déjà polymérisé et soit de ce fait destiné à subir par la suite, dans le cadre d'étapes ultérieures du procédé, une polymérisation ou une réticulation. De préférence, ladite dispersion formant la première composition est une émulsion aqueuse dudit matériau polymérisé, c'est-à-dire que des particules liquides ou semi-liquides dudit polymère à base de polyuréthane sont dispersées dans de l'eau, ce qui permet notamment de faciliter le processus d'application par pulvérisation électrostatique. L'invention n'est cependant pas limitée à la mise en œuvre d'une émulsion aqueuse, et il est par exemple tout à fait envisageable que le matériau polymérisé se présente sous la forme d'une suspension de particules solides de polymère dans de l'eau, voire même d'une solution dudit polymère dans de l'eau.

De façon particulièrement préférentielle, ladite première composition présente une viscosité à 20°C qui est comprise entre sensiblement 1300 et 1400 mPa.s, ce qui permet d'optimiser la pulvérisation électrostatique.

Conformément à l'invention, ladite première opération de pulvérisation électrostatique de ladite première composition est effectuée alors que ledit article est porté à une température d'application supérieure ou égale à 50°C. Cela signifie qu'au moment où la première composition est déposée par pulvérisation électrostatique sur la surface de l'article en verre, la température de ladite surface est supérieure ou égale à 50°C (par exemple de l'ordre de 50-55°C). La mise en œuvre d'une telle température d'application, combinée avec une technique de pulvérisation électrostatique, permet de déposer une épaisseur importante (en l'espèce d'au moins 50 µm, et par exemple comprise entre 100 et 200 µm), tout en conservant une excellente homogénéité et uniformité, en évitant en particulier les coulures.

Le procédé comprend de préférence une étape de flammage dudit article en verre pour le porter (tout du moins en ce qui concerne la surface à recouvrir) à ladite température d'application. Le flammage permet d'obtenir facilement et rapidement le niveau de température d'application souhaité. Il est cependant tout à fait envisageable de recourir alternativement à d'autres méthodes de préchauffage de la surface en verre à recouvrir (par exemple préchauffage dans un four-tunnel...). Le recours à un flammage est toutefois préféré du fait de sa simplicité, sa flexibilité et sa rapidité. En outre, la mise en œuvre d'un flammage permet de parachever le nettoyage de la surface à revêtir.

Avantageusement, ladite première opération de pulvérisation électrostatique est mise en œuvre au moyen d'au moins un premier dispositif de pulvérisation électrostatique à bol ou à disque. Un tel dispositif de pulvérisation électrostatique, connu en tant que tel, met en œuvre un bol ou un disque tournant (par exemple à une vitesse de rotation comprise entre 15 et 40 000 tours/min, de préférence de l'ordre de 25 000 à 30 000 tours/min) permettant de fractionner, d'atomiser, la première composition, sans avoir à recourir à un flux d'air.

Ceci n'exclut toutefois pas la mise en œuvre d'air sous pression, notamment pour assurer le réglage de la taille du cône de projection.

De façon particulièrement avantageuse, ladite première opération de pulvérisation électrostatique est mise en œuvre au moyen d'au moins un premier dispositif de pulvérisation électrostatique à bol refroidi, de façon à ce que ledit bol soit amené par exemple à une température sensiblement inférieure à 0°C, de préférence comprise entre -15 et -5°C, par exemple de l'ordre de -10°C. Le bol rotatif dudit premier dispositif de pulvérisation électrostatique peut par exemple être refroidi par de l'air comprimé ou tout autre moyen. Par exemple, le premier dispositif de pulvérisation électrostatique peut mettre en œuvre une technologie conforme à celle commercialisée sous la marque déposée « *Ice Bell*® » par la société Ransburg. Le refroidissement du bol, en particulier à une température de l'ordre de -10°C, permet de générer une sorte de « *micro-climat* » au niveau de la tête de pulvérisation du premier dispositif de pulvérisation électrostatique, ce qui évite une évaporation prématurée du solvant (qui est de l'eau) contenu dans la première composition à appliquer, empêchant ainsi l'encrassement du matériel de projection par un dépôt intempestif de matière sèche. Les opérations de nettoyage et rinçage du matériel d'application peuvent donc être espacées et les temps d'utilisation en continu du premier dispositif de pulvérisation électrostatique augmentés. Bien entendu, l'invention n'est pas limitée à la mise en œuvre d'un tel dispositif à bol refroidi, et un bol (ou disque) électrostatique classique pourrait également être utilisé, au prix toutefois d'une performance industrielle moindre, compte tenu notamment de la nature de la première composition (formée en l'espèce majoritairement, sinon quasi-totalement ou totalement, de polyuréthane) qui entraîne un risque d'encrassement prématuré de l'équipement.

Avantageusement, ladite première opération de pulvérisation électrostatique s'effectue au sein d'une enceinte dont la température et l'hygrométrie internes sont régulées. Par exemple, ladite première opération de pulvérisation électrostatique peut être réalisée sur une ligne de laquage traditionnelle, avec toutefois un contrôle de la température et de l'hygrométrie internes au sein de la cabine de laquage. Avantageusement, la première opération de pulvérisation électrostatique est mise en œuvre alors que l'article est placé dans une atmosphère présentant une hygrométrie élevée et stable, de préférence comprise entre 60% et 90%, et de façon encore plus préférentielle entre 60% et 70%, afin que l'effet de dépôt électrostatique soit suffisant et homogène sur l'ensemble du ou des article(s) en verre à recouvrir. De préférence, l'hygrométrie n'excède pas 80% afin d'éviter l'apparition de phénomènes perturbateurs de conductions parasites.

Afin d'augmenter encore l'efficacité du dépôt par pulvérisation électrostatique, ladite première opération de pulvérisation électrostatique est mise en oeuvre alors que ledit article en verre est placé au sein d'un brouillard, de préférence produit par un nébuliseur, par exemple un nébuliseur commercialisé sous la marque déposée « *Areco®* ». De préférence, le brouillard en question est un brouillard d'eau qui se présente sous la forme de fines gouttelettes. La technologie de nébulisation Areco® précitée permet par exemple de fragmenter de l'eau, via un système piézoélectrique, pour obtenir ainsi de fines gouttelettes d'eau dont 95% d'entre elles présentent un diamètre inférieur à 5 µm.

Avantageusement, le procédé comprend, préalablement à l'étape de formation dudit film souple, une étape de traitement de surface visant à augmenter la tension de surface dudit article en verre, afin de la rendre plus réactive et d'améliorer ainsi l'effet électrostatique. De préférence, ladite étape de traitement de surface comprend une silicatisation dudit article en verre, permettant de modifier les propriétés de la surface à recouvrir de l'article en verre par un dépôt d'oxyde de silicium (SiOx), et réalisée par exemple par un procédé de dépôt chimique en phase vapeur par combustion (C-CVD), selon lequel des précurseurs liquides ou gazeux sont pyrolysés par une flamme et déposés à la surface du verre sous la forme d'une fine couche de quelques nanomètres d'épaisseur (procédé commercialisé sous la marque commerciale Pyrosil®). Une telle opération de silicatisation de la surface à recouvrir de l'article en verre permet d'uniformiser ladite surface à revêtir, de la rendre plus réactive (tension de surface plus élevée) et donc d'améliorer l'effet électrostatique. Le recours à une silicatisation n'est toutefois pas obligatoire, et il est par exemple envisageable, à titre alternatif, que l'étape de traitement de surface (facultative) comprenne par exemple un traitement Corona ou un traitement plasma dudit article en verre, même si le recours à une silicatisation s'avère en pratique plus efficace pour améliorer l'effet de dépôt électrostatique.

Avantageusement, ladite étape de formation dudit film souple s'effectue au moins en deux temps, avec la mise en oeuvre dans un premier temps d'une opération de dépôt, sur ledit article en verre, d'une couche inférieure de ladite première composition, suivi dans un deuxième temps de ladite première opération de pulvérisation électrostatique pour recouvrir ladite couche inférieure d'une couche supérieure de ladite première composition, lesdites couches inférieure et supérieure constituant ainsi ladite première couche.

En d'autres termes, le recouvrement de l'article en verre par la première couche s'effectue de préférence en deux couches successives, déposées l'une après l'autre (et l'une sur l'autre). L'opération de dépôt de la couche inférieure peut être par exemple mise en œuvre au moyen d'un système d'application pneumatique classique, sous réserve toutefois de diluer suffisamment la première composition afin d'éviter un encrassement trop rapide du matériel de pulvérisation pneumatique. De façon préférentielle, ladite opération de dépôt est elle aussi mise en œuvre par pulvérisation électrostatique, et est donc dans ce cas préférentiel constitué par une opération préalable de pulvérisation électrostatique de ladite première composition sur ledit article, pour obtenir ladite couche inférieure. De préférence, ladite opération préalable de pulvérisation électrostatique est mise en œuvre au moyen d'au moins un deuxième dispositif de pulvérisation électrostatique à bol ou à disque, de préférence à bol refroidi. Avantageusement, lesdits premier et deuxième dispositifs de pulvérisation électrostatique sont distincts mais sensiblement identiques, et consistent de préférence chacun en un dispositif de pulvérisation électrostatique à bol refroidi, par exemple à une température de l'ordre de -10°C. Le recours à un dépôt de la première couche en deux temps permet d'obtenir plus facilement un film souple d'épaisseur élevée parfaitement uniforme et homogène. La couche inférieure joue en effet avantageusement le rôle d'une « *couche primaire attractive* » qui facilite le dépôt et l'accroche de la couche supérieure. De préférence, la première opération de pulvérisation électrostatique est mise en œuvre alors que ladite couche inférieure est encore humide pour que l'effet électrostatique soit présent. Cela signifie donc que le temps de latence entre l'opération de dépôt de la couche inférieure et la première opération de pulvérisation de la couche supérieure est suffisamment réduit pour que le solvant (qui est de l'eau) présent dans la couche inférieure n'ait pas totalement disparu au moment où la couche supérieure est appliquée par pulvérisation électrostatique. Ce mode de réalisation « *mouillé sur mouillé* » particulièrement avantageux, consistant à former la première couche en deux étapes successives, de préférence par deux opérations de pulvérisation électrostatique successives, avantageusement au moyen de dispositifs électrostatique à bol refroidi, permet d'obtenir une première couche d'épaisseur importante et dont l'homogénéité et l'uniformité sont optimales.

Avantageusement, le revêtement est un revêtement multicouches, le procédé comprenant dans ce cas avantageusement une étape de formation d'une couche superficielle de protection par recouvrement de ladite première couche par une deuxième couche formée d'une deuxième composition. La couche superficielle vise donc à recouvrir, de préférence entièrement, le film souple de rétention pour protéger ce dernier, et l'empêcher ainsi d'être dégradé lors de l'utilisation de l'article revêtu ou lors d'étapes ultérieures du procédé de recouvrement. Par exemple, la couche superficielle est destinée à conférer au revêtement une résistance à la stérilisation, ou bien une résistance à l'exposition aux substances alcooliques ou aqueuses (parfum, produits cosmétiques...) ou encore une aptitude à être décorée, par exemple par impression, *etc.* La couche superficielle de protection est donc superposée sur et contre le film de rétention, de telle sorte que ce dernier est intercalé entre la paroi en verre de l'article en verre à recouvrir d'une part et la couche superficielle de protection d'autre part.

Dans un mode de réalisation préférentiel, le revêtement est un revêtement bicouches, la première couche adhérant directement à la paroi en verre (éventuellement silicatisée comme exposé précédemment) tandis que la deuxième couche forme la couche la plus superficielle du revêtement.

Avantageusement, la deuxième couche est déposée sur la première couche selon une épaisseur suffisante pour que ladite couche superficielle de protection présente, à l'issue du procédé selon l'invention, une épaisseur comprise entre sensiblement 2 et 40 µm, de préférence entre 5 et 20 µm. La couche superficielle de protection forme donc une couche de surface protectrice (vernis protecteur) qui isole avantageusement le film souple de rétention de l'environnement extérieur. Ladite deuxième couche destinée à former la couche superficielle de protection peut être appliquée quasiment immédiatement après application de la première couche, lorsque celle-ci est encore humide (par exemple après un temps de désolvatation de 30 secondes à 2 minutes), ou bien plus tard (par exemple plusieurs dizaines de minutes plus tard) lorsque la première couche est sensiblement sèche.

La deuxième composition peut inclure par exemple un composé polymérisable, en particulier sous l'effet d'un chauffage.

Le procédé comprend dans ce cas avantageusement une étape de cuisson de ladite deuxième couche, afin d'entrainer la polymérisation de la deuxième composition contenue dans la deuxième couche, afin que cette dernière forme ainsi un vernis polymère de protection. L'étape de cuisson peut par exemple être réalisée dans un four à convection forcée d'air (par exemple pendant 15 minutes à 150°C), ou encore au moyen d'un four à infrarouge, ou encore au moyen d'un four combinant convection forcée d'air et rayonnement infrarouge.

Avantageusement, le procédé comprend, préalablement à l'étape de cuisson, une étape de désolvatation visant à évacuer le solvant, qui est de l'eau, hors de ladite première couche, ce qui permet d'éviter tout blanchiment et toute formation de cloques ou bulles en surface du revêtement, qui pourraient se produire si une fraction significative du solvant formé d'eau contenu dans la première couche n'était pas évacué (de préférence par évaporation) avant la mise en œuvre de l'étape de cuisson.

L'étape de désolvatation peut simplement consister à laisser reposer la première couche à température ambiante afin que ledit solvant s'évapore naturellement. Dans ce cas, l'étape de désolvatation peut par exemple consister à laisser ledit solvant s'évaporer naturellement pendant une durée de l'ordre de 25 à 40 minutes à température ambiante, cette durée variant en fonction de l'épaisseur de la première couche.
Cette durée de désolvatation peut être réduite par exemple à 10-20 minutes si un chauffage à 40-60°C de la première couche et/ou un brassage d'air de l'environnement de la première couche est mis en œuvre, afin d'accélérer la désolvatation.

Le procédé permet ainsi, dans un mode de réalisation particulièrement avantageux, de recouvrir des récipients en verre d'un revêtement de rétention anti-casse de la façon suivante.

Les récipients en verre à recouvrir sont montés sur un convoyeur qui comporte des tiges disposées en file indienne sur chacune desquelles est emmanché, par exemple par son goulot, un récipient en verre à revêtir. Le convoyeur déplace par exemple les articles à revêtir à une vitesse linéaire de 3 m/min. Les tiges font par exemple environ 40 cm de haut, afin que les articles en verre à revêtir soit aussi éloignés que possible des parties métalliques du convoyeur, qui pourraient perturber le dépôt électrostatique. Les articles en verre sont ensuite soumis à une étape de silicatisation de leur surface, par exemple au moyen du procédé Pyrosil® évoqué précédemment.

Puis les articles en verre sont soumis un flammage qui permet de porter leur surface à recouvrir à une température préférentielle de 50-55°C. En parallèle, les articles en verre sont placés au sein d'un brouillard humide obtenu par nébulisation (par exemple au moyen de la technologie Areco® évoquée précédemment). La couche inférieure formée de la première composition est alors appliquée au moyen d'un dispositif de pulvérisation électrostatique à bol refroidi à -10°C, et ce alors que la surface de l'article en verre se trouve à une température d'environ 50-55°C comme évoqué précédemment. Cette opération préalable de pulvérisation électrostatique se déroule au sein d'une enceinte dont l'hygrométrie est stabilisée à 60-70%, afin que l'effet électrostatique soit suffisant et homogène. Puis, alors que la couche inférieure est encore humide, la première opération de pulvérisation électrostatique est mise en œuvre, de préférence là encore au moyen d'un dispositif de pulvérisation électrostatique à bol refroidi à environ -10°C, pour recouvrir la couche inférieure d'une couche supérieure de ladite première composition, lesdites couches inférieure et supérieure formant alors la première couche. Le bol tournant de chaque pulvérisateur électrostatique mis en œuvre pour déposer respectivement la couche inférieure et la couche supérieure présente par exemple un diamètre de 30 mm, et la distance entre le bol tournant et la surface à revêtir est d'environ 10 cm, ce qui permet de maximiser le taux de transfert. Le débit matière est avantageusement ajusté en fonction de l'épaisseur de couche souhaitée. Un débit matière de l'ordre de 30 à 50 g/min est par exemple mis en œuvre pour le dépôt de la couche inférieure, tandis qu'un débit matière compris avantageusement entre 120 et 160 g/min est mis en œuvre pour le dépôt de la couche supérieure. Le recours à une application en deux temps de la première couche, en particulier lorsqu'il est réalisé en « *mouillé sur mouillé* », permet un dépôt particulièrement efficace, avec un débit matière requis plus faible que si le dépôt était effectué en une seule couche, et ce grâce au rôle de « *couche primaire d'uniformisation et d'attraction* » joué par la couche inférieure, qui favorise le dépôt de la couche supérieure. La paroi de verre à recouvrir présente en effet généralement un état de surface irrégulier, qui est différent d'un flacon à l'autre. Le dépôt d'une couche inférieure, même très fine, permet d'uniformiser de manière contrôlée et maîtrisée la surface à recouvrir, de façon à ce que tous les flacons présentent ainsi des surfaces uniformes et sensiblement identiques (en ce qui concerne l'état de surface) d'un flacon à l'autre. Le dépôt de la couche supérieure, qui forme la majeure partie (en épaisseur), sinon l'essentiel, de la première couche, pourra ensuite être effectué dans des conditions optimales, sur une surface à la fois uniforme et favorisant l'effet électrostatique, qui est identique d'un flacon à l'autre.

Ensuite, après un temps de désolvatation visant à évacuer une fraction plus ou moins importante du solvant aqueux présent dans la première couche, une deuxième couche est appliquée sur la première couche, par exemple par un procédé de pulvérisation pneumatique (ou éventuellement par un procédé de pulvérisation électrostatique, dont la mise en œuvre n'est toutefois pas indispensable compte tenu notamment de la faible viscosité et de la faible épaisseur de cette deuxième couche). Une étape de désolvatation est par la suite mise en œuvre, afin d'évacuer sensiblement complètement le solvant hors de la première couche.

Enfin, le récipient ainsi recouvert desdites première et deuxième couches est placé dans un four pour subir une cuisson permettant la polymérisation de la deuxième couche, afin que cette dernière se transforme en une couche superficielle de protection.

L'invention permet en définitive d'obtenir un revêtement de rétention et de protection contre les chocs particulièrement efficace, résistant et esthétique, et ce au moyen d'un procédé simple, rapide, efficace et bon marché.

## Revendications

1. Procédé de recouvrement d'un article en verre par un revêtement formé d'au moins un film souple de rétention, ledit procédé étant **caractérisé en ce qu'**il comprend une étape de formation dudit film souple incluant au moins une première opération de pulvérisation électrostatique, sur ledit article porté à une température d'application supérieure ou égale à 50°C, d'une première composition formée par une dispersion d'une substance à base de polyuréthane dans un solvant, pour obtenir une première couche qui est destinée à former ledit film souple et qui est suffisamment épaisse pour que ledit film souple présente une épaisseur d'au moins 50 µm, ledit solvant étant de l'eau, de sorte que ladite première composition est formée par une dispersion en phase aqueuse de ladite substance à base de polyuréthane.

2. Procédé selon la revendication 1 **caractérisé en ce que** ladite première opération de pulvérisation électrostatique est mise en œuvre au moyen d'au moins un premier dispositif de pulvérisation électrostatique à bol ou à disque.

3. Procédé selon la revendication 2 **caractérisé en ce que** ladite première opération de pulvérisation électrostatique est mise en œuvre au moyen d'au moins un premier dispositif de pulvérisation électrostatique à bol refroidi, ledit bol étant préférentiellement refroidi de façon à être amené à une température sensiblement inférieure à 0°C, de préférence comprise entre -15°C et -5°C, par exemple de l'ordre de -10°C.

4. Procédé selon l'une des revendications précédentes **caractérisé en ce que** ladite première opération de pulvérisation électrostatique est mise en œuvre alors que ledit article est placé dans une atmosphère présentant une hygrométrie comprise entre 60% et 90%, de préférence entre 60% et 70%.

5. Procédé selon l'une des revendications précédentes **caractérisé en ce que** ladite dispersion est une émulsion aqueuse dudit matériau polymérisé.

6. Procédé selon la revendication 5 **caractérisé en ce que** ladite substance consiste en un matériau polymérisé non réactif dont la masse molaire est suffisamment élevée pour que la simple évaporation de la phase aqueuse entraîne la formation dudit film souple.

7. Procédé selon l'une des revendications précédentes **caractérisé en ce que** ladite épaisseur dudit film souple est sensiblement inférieure ou égale à 300 µm, de préférence sensiblement inférieure ou égale à 200 µm.

8. Procédé selon l'une des revendications précédentes **caractérisé en ce qu'**il comprend, préalablement à l'étape de formation dudit film souple, une étape de traitement de surface visant à augmenter la tension de surface dudit article en verre, ladite étape de traitement de surface comprenant de préférence une silicatisation, ou un traitement Corona ou un traitement plasma dudit article en verre.

9. Procédé selon l'une des revendications précédentes **caractérisé en ce qu'**il comprend une étape de flammage dudit article pour le porter à ladite température d'application.

10. Procédé selon l'une des revendications précédentes **caractérisé en ce que** ladite étape de formation dudit film souple s'effectue au moins en deux temps, avec la mise en œuvre dans un premier temps d'une opération de dépôt sur ledit article d'une couche inférieure de ladite première composition, suivie dans un deuxième temps de ladite première opération de pulvérisation électrostatique pour recouvrir ladite couche inférieure d'une couche supérieure de ladite première composition, lesdites couches inférieure et supérieure constituant ladite première couche, ladite première opération de pulvérisation électrostatique étant de préférence mise en œuvre alors que ladite couche inférieure est encore humide.

11. Procédé selon la revendication 10 **caractérisé en ce que** ladite opération de dépôt est constituée par une opération préalable de pulvérisation électrostatique de ladite première composition sur ledit article, ladite opération préalable de pulvérisation électrostatique étant préférentiellement mise en œuvre au moyen d'au moins un deuxième dispositif de pulvérisation électrostatique à bol ou à disque, de préférence à bol refroidi.

12. Procédé selon l'une des revendications précédentes **caractérisé en ce que** ledit revêtement est un revêtement multicouches, ledit procédé comprenant une étape de formation d'une couche superficielle de protection par recouvrement de ladite première couche par une deuxième couche formée d'une deuxième composition, ladite deuxième couche étant préférentiellement déposée sur ladite première couche selon une épaisseur suffisante pour que ladite couche superficielle de protection présente une épaisseur comprise entre sensiblement 2 et 40 µm, de préférence entre 5 et 20 µm.

13. Procédé selon la revendication 12 **caractérisé en ce qu'**il comprend une étape de cuisson de ladite deuxième couche ainsi que de préférence, préalablement à ladite étape de cuisson, une étape de désolvatation visant à évacuer le solvant hors de ladite première couche.

14. Procédé selon l'une des revendications précédentes **caractérisé en ce que** ledit article en verre est un récipient du genre flacon ou bouteille pourvu d'une paroi en verre délimitant une cavité d'accueil pour une substance fluide, ladite paroi en verre présentant une face interne située en regard de ladite cavité et une face externe opposée, ledit revêtement recouvrant de préférence au moins en partie, et de préférence encore sensiblement en totalité, ladite face externe.

## Patentansprüche

1. Beschichtungsverfahren eines Glasartikels mit einer Beschichtung, die aus mindestens einem flexiblen Haltefilm gebildet wird, wobei das Verfahren **dadurch gekennzeichnet ist, dass** es einen Schritt der Bildung des flexiblen Films umfasst, welcher mindestens einen ersten Vorgang einer elektrostatischen Zerstäubung, auf dem Artikel, der auf eine Aufbringtemperatur größer oder gleich 50 °C gebracht wird, einer ersten Zusammensetzung aufweist, die aus einer Dispersion einer Substanz auf der Basis Polyurethan in einem Lösungsmittel gebildet wird, um eine erste Schicht zu erhalten, die dazu bestimmt ist, den flexiblen Film zu bilden, und die ausreichend dick ist, damit der flexible Film eine Dicke von mindestens 50 µm aufweist, wobei das Lösungsmittel Wasser ist, so dass die erste Zusammensetzung aus einer Dispersion der Substanz auf der Basis Polyurethan in wässriger Phase gebildet wird.

2. Verfahren nach Anspruch 1, **dadurch gekennzeichnet, dass** der erste Vorgang einer elektrostatischen Zerstäubung mit Hilfe mindestens einer ersten elektrostatischen Zerstäubungsvorrichtung vom Glocken- oder Scheibentyp durchgeführt wird.

3. Verfahren nach Anspruch 2, **dadurch gekennzeichnet, dass** der erste Vorgang einer elektrostatischen Zerstäubung mit Hilfe mindestens einer ersten elektrostatischen Zerstäubungsvorrichtung mit einer gekühlten Sprühglocke durchgeführt wird, wobei die Glocke vorzugsweise gekühlt wird, um auf eine Temperatur im Wesentlichen unter 0 °C gebracht zu werden, vorzugsweise zwischen -15 °C und -5 °C, zum Beispiel in der Größenordnung von -10 °C.

4. Verfahren nach einem der vorhergehenden Ansprüche, **dadurch gekennzeichnet, dass** der erste Vorgang einer elektrostatischen Zerstäubung durchgeführt wird, während der Artikel in eine Atmosphäre platziert wird, die eine Luftfeuchtigkeit zwischen 60 % und 90 % aufweist, vorzugsweise zwischen 60 % und 70 %.

5. Verfahren nach einem der vorhergehenden Ansprüche, **dadurch gekennzeichnet, dass** die erste Dispersion eine wässrige Emulsion des polymerisierten Materials ist.

6. Verfahren nach Anspruch 5, **dadurch gekennzeichnet, dass** die Substanz aus einem nicht reaktiven polymerisierten Material besteht, dessen Molmasse ausreichend hoch ist, um durch einfache Verdampfung der wässrigen Phase zur Bildung des flexiblen Films zu führen.

7. Verfahren nach einem der vorhergehenden Ansprüche, **dadurch gekennzeichnet, dass** die Dicke des flexiblen Films im Wesentlichen kleiner oder gleich 300 µm ist, vorzugsweise im Wesentlichen kleiner oder gleich 200 µm.

8. Verfahren nach einem der vorhergehenden Ansprüche, **dadurch gekennzeichnet, dass** es, vor dem Schritt der Bildung des flexiblen Films, einen Schritt der Oberflächenbehandlung umfasst, der darauf abzielt, die Oberflächenspannung des Glasartikels zu erhöhen, wobei der Schritt der Oberflächenbehandlung vorzugsweise eine Silikatisierung oder eine Corona-Behandlung oder eine Plasmabehandlung des Glasartikels umfasst.

9. Verfahren nach einem der vorhergehenden Ansprüche, **dadurch gekennzeichnet, dass** es einen Schritt der Flammbehandlung des Artikels umfasst, um ihn auf die Aufbringtemperatur zu bringen.

10. Verfahren nach einem der vorhergehenden Ansprüche, **dadurch gekennzeichnet, dass** der Schritt der Bildung des flexiblen Films in mindestens zwei Phasen vorgenommen wird, wobei in einer ersten Phase ein Vorgang eines Aufbringens einer unteren Schicht der ersten Zusammensetzung auf den Artikel durchgeführt wird, gefolgt von einer zweiten Phase des ersten Vorgangs der elektrostatischen Zerstäubung, um die untere Schicht mit einer oberen Schicht der ersten Zusammensetzung zu bedecken, wobei die untere und obere Schicht die erste Schicht bilden, wobei der erste Vorgang der elektrostatischen Zerstäubung vorzugsweise durchgeführt wird, während die untere Schicht noch feucht ist.

11. Verfahren nach Anspruch 10, **dadurch gekennzeichnet, dass** der Vorgang des Aufbringens aus einem Vorgang vor der elektrostatischen Zerstäubung der ersten Zusammensetzung auf den Artikel besteht, wobei der Vorgang vor der elektrostatischen Zerstäubung vorzugsweise mit Hilfe mindestens einer zweiten elektrostatischen Zerstäubungsvorrichtung mit einer Glocke oder mit einer Scheibe durchgeführt wird, vorzugsweise mit einer gekühlten Glocke.

12. Verfahren nach einem der vorhergehenden Ansprüche, **dadurch gekennzeichnet, dass** die Beschichtung eine mehrschichtige Beschichtung ist, wobei das Verfahren einen Schritt der Bildung einer Oberflächenschutzschicht durch Bedeckung der ersten Schicht mit einer zweiten Schicht umfasst, die aus einer zweiten Zusammensetzung gebildet wird, wobei die zweite Schicht vorzugsweise auf der ersten Schicht mit einer Dicke aufgebracht wird, die ausreicht, damit die Oberflächenschutzschicht eine Dicke im Wesentlichen zwischen 2 und 40 µm aufweist, vorzugsweise zwischen 5 und 20 µm.

13. Verfahren nach Anspruch 12, **dadurch gekennzeichnet, dass** es einen Schritt des Brennens der zweiten Schicht sowie vorzugsweise, vor dem Schritt des Brennens, einen Schritt der Desolvatisierung umfasst, der darauf abzielt, das Lösungsmittel aus der ersten Schicht zu entfernen.

14. Verfahren nach einem der vorhergehenden Ansprüche, **dadurch gekennzeichnet, dass** der Glasartikel ein Behälter der Art eines Flakons oder eines Fläschchens ist, das mit einer Glaswand versehen ist, die einen Aufnahmehohlraum für eine fluide Substanz begrenzt, wobei die Glaswand eine Innenfläche, die gegenüber dem Hohlraum angeordnet ist, und eine gegenüberliegende Außenfläche aufweist, wobei die Beschichtung vorzugsweise mindestens einen Teil und vorzugsweise sogar im Wesentlichen die Gesamtheit der Außenfläche bedeckt.

## Claims

1. A method for covering a glass article with a coating formed of at least one flexible retention film, said method being **characterized in that** it comprises a step of forming said flexible film including at least one first electrostatic spraying operation, on said article brought to an application temperature higher than or equal to 50°C, of a first composition formed by a dispersion of a polyurethane-based substance in a solvent, in order to obtain a first layer which is intended to form said flexible film and which is sufficiently thick so that said flexible film presents a thickness of at least 50 µm, said solvent being water, so that said first composition is formed by a dispersion in an aqueous phase of said polyurethane-based substance.

2. The method according to claim 1 **characterized in that** said first electrostatic spraying operation is implemented by means of at least one first bowl-type or disc-type electrostatic spraying device.

3. The method according to claim 2 **characterized in that** said first electrostatic spraying operation is implemented by means of at least one first cooled bowl-type electrostatic spraying device, said bowl being preferably cooled so as to be brought to a temperature substantially lower than 0°C, preferably comprised between -15°C and -5°C, for example in the range of -10°C.

4. The method according to any of the preceding claims **characterized in that** said first electrostatic spraying operation is implemented while said article is placed in an atmosphere presenting a hygrometry comprised between 60% and 90%, preferably between 60% and 70%.

5. The method according to any of the preceding claims **characterized in that** said dispersion is an aqueous emulsion of said polymerized material.

6. The method according to claim 5 **characterized in that** said substance consists of a non-reactive polymerized material the molar mass of which is sufficiently high so that the simple evaporation of the aqueous phase results in the formation of said flexible film.

7. The method according to any of the preceding claims **characterized in that** said thickness of said flexible film is substantially smaller than or equal to 300 µm, preferably substantially smaller than or equal to 200 µm.

8. The method according to any of the preceding claims **characterized in that** it comprises, prior to the step of forming said flexible film, a surface treatment step aiming to increase the surface tension of said glass article, said surface treatment step preferably comprising a silicatization, or a Corona treatment or a plasma treatment of said glass article.

9. The method according to any of the preceding claims **characterized in that** it comprises a step of flame treatment of said article to bring it to said application temperature.

10. The method according to any of the preceding claims **characterized in that** said step of forming said flexible film is performed at least in two stages, with the implementation, in a first stage, of a deposition operation on said article of a lower layer of said first composition, followed, in a second stage, by said first electrostatic spraying operation to cover said lower layer with an upper layer of said first composition, said lower and upper layers constituting said first layer, said first electrostatic spraying operation being preferably implemented while said lower layer is still damp.

11. The method according to claim 10 **characterized in that** said deposition operation consists of a preliminary electrostatic spraying operation of said first composition on said article, said preliminary electrostatic spraying operation being preferably implemented by means of at least one second bowl-type or disc-type, preferably cooled bowl-type electrostatic spraying device.

12. The method according to any of the preceding claims **characterized in that** said coating is a multilayer coating, said method comprising a step of forming a protective surface layer by covering said first layer by a second layer formed of a second composition, said second layer being preferably deposited on said first layer in a sufficient thickness so that said protective surface layer presents a thickness substantially comprised between 2 and 40 µm, preferably between 5 and 20 µm.

13. The method according to claim 12 **characterized in that** it comprises a baking step of said second layer, and also preferably, prior to said baking step, a desolvation step aiming to evacuate the solvent out from said first layer.

14. The method according to any of the preceding claims **characterized in that** said glass article is a vessel such as a flask or a bottle provided with a glass wall delimiting a receiving cavity for a fluid substance, said glass wall presenting an inner face located facing said cavity and an opposite outer face, said coating covering at least partially, and preferably substantially completely, said outer face.
